Europäisches Patentamt

European Patent Office

Office européen des brevets

(19)

(11) Veröffentlichungsnummer : **0 075 715**
**B1**

(12) # EUROPÄISCHE PATENTSCHRIFT

(45) Veröffentlichungstag der Patentschrift :
**15.03.89**

(21) Anmeldenummer : **82107496.0**

(22) Anmeldetag : **17.08.82**

(51) Int. Cl.⁴ : **G 06 F 12/08**

(54) **Cachespeicher und Verfahren zu seinem Betrieb.**

(30) Priorität : **30.09.81 DE 3138973**

(43) Veröffentlichungstag der Anmeldung :
**06.04.83 Patentblatt 83/14**

(45) Bekanntmachung des Hinweises auf die Patenterteilung : **15.03.89 Patentblatt 89/11**

(84) Benannte Vertragsstaaten :
**DE FR GB**

(56) Entgegenhaltungen :
**US--A-- 4 084 230**
**US--A-- 4 195 343**
**COMPUTER DESIGN, Band 9, Nr. 12, Dezember 1970,
Seiten 24,25, Concord, US; "MECL III offers the
fastest"**
**1981, IEEE International Solid-State Circuit Conference, vol. 24, Feb. 1981, pp. 112,113,261**

(73) Patentinhaber : **Siemens Aktiengesellschaft Berlin
und München**
**Wittelsbacherplatz 2**
**D-8000 München 2 (DE)**

(72) Erfinder : **Gerner, Manfred, Dipl.-Ing.**
**Kleiststrasse 10**
**D-8012 Ottobrunn (DE)**

EP 0 075 715 B1

## Beschreibung

Die Erfindung betrifft einen Cachespeicher nach dem Oberbegriff des Anspruchs 1.

Aufgabe eines Cachespeichers ist es, bei einem Rechner die jeweils aktuellen Bereiche (Seiten) des Hauptspeichers bereitzuhalten, auf die dann mit der wesentlich kürzeren Zykluszeit des Cachespeichers zugegriffen werden kann. Da der Cachespeicher um Größenordnungen kleiner ist als der Hauptspeicher, sind nicht immer alle benötigten Seiten aus dem Hauptspeicher im Cachespeicher. Falls eine benötigte Seite aus dem Hauptspeicher nicht im Cachespeicher ist, muß diese aktuelle Seite aus dem Hauptspeicher in den Cachespeicher nachgeladen werden, wobei eine weniger aktuelle Seite im Cachespeicher überschrieben wird. Welche Seiten aus dem Hauptspeicher sich gerade im Cachespeicher befinden, ist in einem Verzeichnis (Directory) festgehalten. Die Abbildungsvorschrift des Hauptspeichers auf den Cachespeicher, die Größe des Cachespeichers, sowie die Nachladestrategie für Seiten aus dem Hauptspeicher bestimmen die Effektivität eines Cachespeichers.

Bei einem Speicherzugriff des Rechners muß ein Cachespeichersystem folgende Funktionen erfüllen :

a) Überprüfen, ob die gewünschte Seite aus dem Hauptspeicher bereits im Cachespeicher ist (Hit).

b) Falls eine benötigte Seite aus dem Hauptspeicher nicht im Cachespeicher ist (Miss), muß diese Seite aus dem Hauptspeicher in den Cachespeicher nachgeladen werden.

c) Beim Nachladen einer Seite aus dem Hauptspeicher in den Cachespeicher muß entschieden werden, welche Seite im Cachespeicher überschrieben werden soll (Ersetzungsalgorithmus).

Aus Computer Design, Bd. 9, Nr. 12, Dez. 1970, S. 24 u. 25 ergibt sich ein Cachespeicher bestehend aus einem Assoziativspeicher und einem Schreiblesespeicher oder RAM Speicher. Im Assoziativspeicher ist die Adressenliste der Wörter gespeichert, die in dem Schreiblesespeicher enthalten sind. Der Cachespeicher ist aus mehreren Bausteinen aufgebaut und zwischen dem Assoziativteil des Speichers und dem Schreiblesespeicher sind Schaltkreise angeordnet, um die von dem Assoziativspeicher abgegebenen Hitsignale den richtigen Ansteuerleitungen des Schreiblesespeichers zuzuführen.

Die US-A-4 084 230 zeigt einen weiteren Cachespeicher, der aus einem assoziativen Teil und einem Schreiblesespeicher besteht. Dabei ist jeder zu speichernden Seite ein Chip zugeordnet, auf dem neben dem Schreiblesespeicher für diese Seite noch ein Vergleichsregister, ein Wortdecoder und ein Bitdecoder enthalten ist. Der Cachespeicher besteht somit aus einer Vielzahl von Chips.

Aus US-A-4 195 343 ist bekannt, daß der Austausch von Seiten im Cachespeicher nach dem FIFO-Prinzip erfolgen kann.

Aus 1981 IEEE International Solid-State Circuit Conference, Vol. 24, Febr. 1981, S. 112, 113, 261 ist ein Mikrobefehlssteuerwerk bekannt, das auf einem Chip zusammen mit einem Cachespeicher realisiert ist. Der Cachespeicher ist vollassoziativ.

Für Schaltungen auf VLSI-Chips sind regelmäßige und verdrahtungsarme Strukturen besonders wichtig. Der vorliegenden Erfindung liegt die Aufgabe zugrunde, einen Cachespeicher der eingangs genannten Art anzugeben, welcher den Anforderungen für VLSI-Schaltungen gerecht wird.

Diese Aufgabe wird erfindungsgemäß durch einen Cachespeicher der eingangs genannten Art gelöst, welcher die kennzeichnenden Merkmale des Anspruchs 1 aufweist.

Ausgestaltungen der Erfindung sind in den Unteransprüchen, der Beschreibung und der Zeichnung dargestellt.

Ein erfindungsgemäßes Cachespeichersystem weist insbesondere regelmäßige und verdrahtungsarme Strukturen auf.

Bei der Realisierung eines erfindungsgemäßen VLSI-Mikroprozessorcachespeichers genügt eine einfache CAM-Zeile, wie sie bei Assoziativspeichern (CAM = Content Adressable Memory) üblich ist, da nur die Funktionen vergleichen und schreiben, nicht dagegen die Funktion lesen realisiert werden muß. Durch direkte Kopplung des Assoziativspeichers (CAM) und des RAM-Teils des VLSI-onchip Mikroprozessorcachespeichers entfällt zusätzlicher Verdrahtungsaufwand. Die Verwendung eines Assoziativspeichers (CAM) als Adressenliste (Directory) ermöglicht eine reguläre Struktur eines erfindungsgemäßen VLSI-onchip-Mikroprozessorcachespeichers. Durch den Einsatz eines Assoziativspeichers (CAM) als Adressenliste (Directory) erhält man eine Abbildung des Hauptspeichers des Rechners auf den Cachespeicher des Rechners mit der größtmöglichen Anzahl an Freiheitsgraden. Dadurch ergibt sich eine besonders effektive Nutzung des erfindungsgemäßen VLSI-onchip Mikroprozessorcachespeichers.

Figur 1 zeigt einen erfindungsgemäßen VLSI-onchip Mikroprozessorcachespeicher mit Adressenliste (Directory).

Figur 2 zeigt ein Schaltungsbeispiel für eine Zelle einer erfindungsgemäßen Adressenliste (Directory).

Figur 3 zeigt, daß bei einer erfindungsgemäßen Adressenliste (Directory) eine reguläre Struktur erzielt wird.

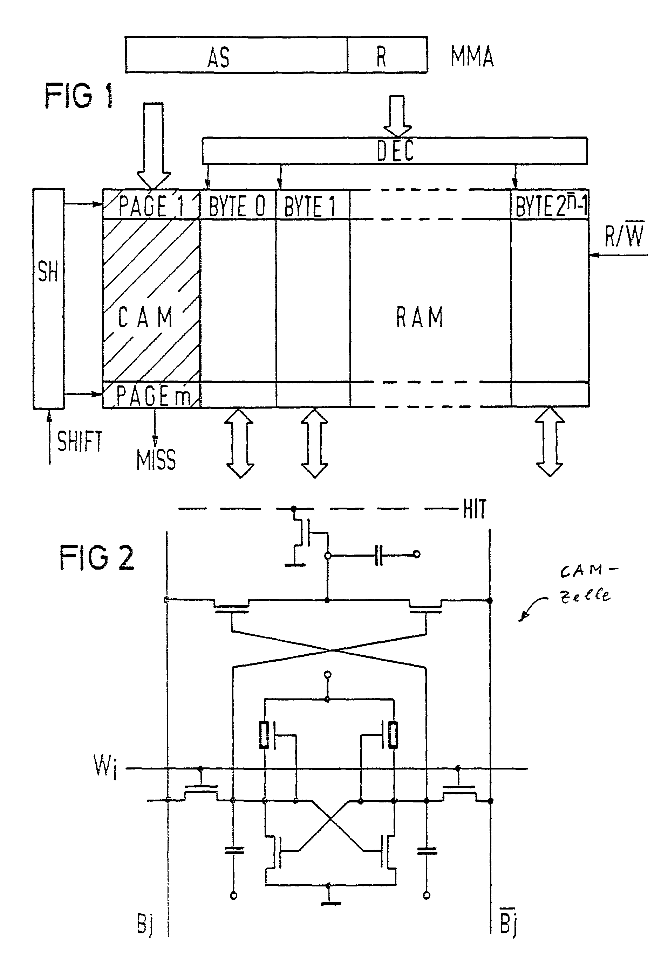

Figur 1 zeigt einen erfindungsgemäßen VLSI-onchip Mikroprozessorcachespeicher mit Adressenliste (Directory). Der Hauptspeicher ist wesentlich größer als der VLSI-onchip Mikroprozessorcachespeicher. Daher befinden sich immer nur Teile des Hauptspeicherinhalts im VLSI-onchip Mikroprozessorcachespeicher. Der Hauptspeicher und der VLSI-onchip Mikroprozessorcachespeicher sind in gleich große Bereiche, sogenannte Seiten (pages) unterteilt. Diese Seiten bilden die logische Transporteinheit zwischen Hauptspeicher und VLSI-onchip Mikroprozessorcachespeicher. Typische Größen sind 16 oder 32 Byte pro Seite. Ein erfindungsgemäßer VLSI-onchip Mikroprozessorcachespeicher ist vollassoziativ. Dies bedeutet, daß jede Seite des Hauptspeichers auf jede Seite des VLSI-onchip Mikroprozessorcachespeichers abgebildet werden kann. Diese Abbildung bietet die größte Anzahl an Freiheitsgraden. Die Folge ist eine hohe Trefferrate, wobei die Wahrscheinlichkeit, daß ein vom Mikroprozessor angeforderter Befehl bzw. Datum im VLSI-onchip Mikroprozessorcachespeicher angelegt ist, als Trefferrate bezeichnet wird.

Die Adressenliste (Directory) eines erfindungsgemäßen VLSI-onchip Mikroprozessorcachespeichers wird durch einen Assoziativspeicher (CAM = Content Adressable Memory) realisiert. Die vom Mikroprozessor angelegte Adresse MMA wird in ein assoziatives Subjekt AS, welches der Seitennummer innerhalb des Hauptspeichers MM entspricht, und eine relative Byteadresse R innerhalb dieser Seite unterteilt. In der Adressenliste CAM ist für jede VLSI-onchip Mikroprozessorcachespeicherseite PAGE1... PAGEm die zugehörige Seitennummer AS des Hauptspeichers MM abgelegt. Das assoziative Subjekt AS der vom Mikroprozessor angelegten Adresse MMA wird mit allen in der Adressenliste CAM abgespeicherten Seitenadressen, welche den Seitennummern innerhalb des Hauptspeichers MM entsprechen, parallel verglichen. Die Adressenliste CAM ist direkt mit den Aktivierungsleitungen des Schreib/Lesespeichers RAM verbunden. Ein Dekoder zur Adressübersetzung entfällt dadurch. Bei Übereinstimmung des assoziativen Subjekts AS der vom Mikroprozessor angelegten Adresse MMA mit einer der in der Adressenliste CAM gespeicherten Adressen wird die zugehörige Seite des Schreib/Lesespeichers RAM aktiviert. Die Auswahl des auszulesenden Wortes innerhalb einer Seite des Schreib-/Lesespeichers RAM erfolgt über einen Dekoder DEC, an welchem die relative Adresse innerhalb einer Seite R als Teil der Hauptspeicheradresse MMA anlegt.

Ergibt sich keine Übereinstimmung des assoziativen Subjekts AS der Hauptspeicheradresse MMA beim Vergleich mit den gespeicherten Adressen in der Adressenliste CAM, so erscheint ein Signal MISS. Dieses Signal MISS veranlaßt das Nachladen der fehlenden Seite.

Bei diesem Nachladen der fehlenden Seite wird diejenige Seite im Schreib-/Lesespeicher RAM überschrieben, die sich am längsten im VLSI-onchip Mikroprozessorcachespeicher befindet (FIFO-Verfahren). Dieses FIFO-Verfahren wird mit Hilfe eines Schieberegisters SH realisiert. Dieses Schieberegister SH enthält eine 1, die durch das Anlegen eines SHIFT-Signals in einer Richtung verschoben werden kann (Ring-SHIFT). Die im Schieberegister SH gespeicherte 1 weist immer auf diejenige Seite im VLSI-onchip Mikroprozessorcachespeicher, welche sich am längsten im VLSI-onchip Mikroprozessorcachespeicher befindet. Nach jedem Nachladen einer neuen Seite aus dem Hauptspeicher MM in den VLSI-onchip Mikroprozessorcachespeicher wird diese 1 im Schieberegister SH um eine Stelle verschoben. Bei Auftreten eines MISS-Signals wird durch diese 1 im Schieberegister SH diejenige Seitenadresse in der Adressenliste CAM aktiviert, deren zugehörige Seite sich bereits am längsten in VLSI-onchip Mikroprozessorcachespeicher befindet. In diese aktivierte Zeile der Adressenliste CAM wird das assoziative Subjekt AS der nachzuladenden Seite aus der Hauptspeicheradresse MMA eingetragen. In die gleichzeitig aktivierte Zeile des Schreib-/Lesespeichers RAM wird die neue Seite aus dem Hauptspeicher MM geladen.

Figur 2 zeigt ein Schaltungsbeispiel für eine Zelle einer erfindungsgemäßen Adressenliste (Directory). Figur 2 zeigt eine Zelle einer Adressenliste CAM nach Figur 1. Eine erfindungsgemäße CAM-Zelle weist eine sehr einfache Struktur auf, weil nur die Funktionen Vergleichen und Schreiben, nicht dagegen die Funktion Lesen, von dieser CAM-Zelle realisiert werden müssen. Über die Leitung $B_j$ wird, solange die Leitung $W_i$ aktiviert ist, die an der Leitung $B_j$ vorliegende Information in die CAM-Zelle eingeschrieben. An der Leitung $\bar{B}_j$ liegt das invertierte Signal von der Leitung $B_j$ an. Ist die Leitung $W_i$ nicht aktiviert, so kann ein an der Leitung $B_j$ anliegendes Signal mit dem Inhalt der CAM-Zelle verglichen werden. Stimmt das an der Leitung $B_j$ anliegende Signal mit dem Inhalt der CAM-Zelle überein, so wird ein an der Treffer-Leitung HIT anliegendes positives Signal nicht verändert. Stimmt bei nicht aktivierter Leitung $W_i$ das an der Leitung $B_j$ anliegende Signal nicht mit dem Inhalt der CAM-Zelle überein, so wird ein positives Signal der Treffer-Leitung HIT nicht ermöglicht.

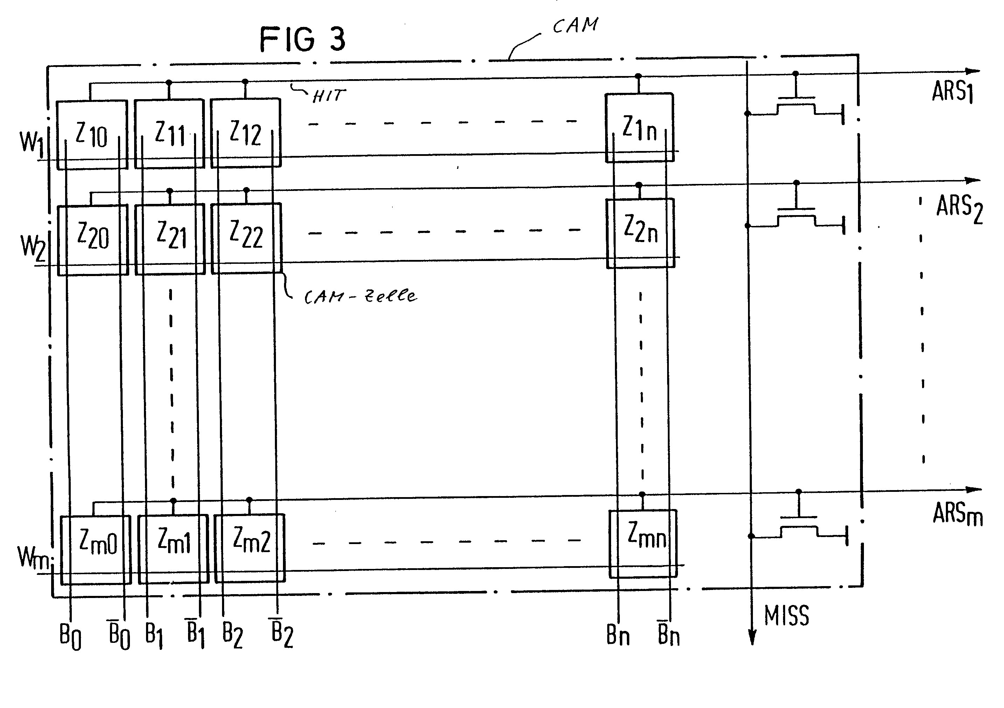

Figur 3 zeigt, daß bei einer erfindungsgemäßen Adressenliste eine reguläre Struktur erzielt wird. Schreib- und Vergleichsleitungen ($W_i$, $B_j$, $\bar{B}_j$) sind nur angedeutet. Lasttransistoren sind nicht eingezeichnet. Figur 3 zeigt eine vollassoziative Adressenliste (Directory) mit RAM-Schnittstellen. Die vollassoziative Adressenliste CAM besteht im wesentlichen aus CAM-Zellen $Z_{ij}$ gemäß Figur 2, welche über Schreib- und Vergleichsleitungen $W_i$, $B_j$, $\bar{B}_j$ und Aktivierungsleitungen $ARS_i$ zu den zugehörigen RAM-Seiten des VLSI-onchip Mikroprozessorcachespeichers verbunden sind. Wenn beim parallelen Vergleich über die Leitungen $B_j$, $\bar{B}_j$ einer vom Mikroprozessor angelegten Adresse mit allen in der Adressenliste CAM abgespeicherten Seitenadressen eine RAM-Seite über eine Leitung $ARS_i$ aktiviert wird, wo wird die MISS-Leitung nicht aktiviert. Wenn jedoch beim Vergleich einer vom Mikroprozessor angelegten Adresse mit allen in der Adressenliste CAM abgespeicherten Seitenadressen keine einzige RAM-Seite des VLSI-onchip Mikroprozessorcachespeichers aktiviert wird, so wird über eine Aktivierung der MISS-Leitung die vom Mikroprozessor geforderte Seite aus dem Hauptspeicher MM in den VLSI-onchip Mikroprozessorcachespeicher nachgeladen. Eine CAM-Zelle $Z_{ij}$ wird von der Wortlei-

tung $W_i$ und den Bitleitungen, $B_i$, $\bar{B}_j$ angesteuert. Durch die direkte Kopplung der Adressenliste CAM und des Schreib-/Lesespeichers RAM, wie sie in Figur 3 dargestellt ist, wird der Verdrahtungsaufwand erheblich erniedrigt. Die Verwendung eines CAM als Adressenliste ermöglicht eine reguläre Struktur, wie aus der Zeichnung ersichtlich ist. Durch den Einsatz eines CAM als Adressenliste erhält man eine Abbildung des Hauptspeichers auf den VLSI-onchip Mikroprozessorcachespeicher mit der größtmöglichen Anzahl an Freiheitsgraden. Es ergibt sich dadurch eine besonders effektive Nutzung des VLSI-onchip Mikroprozessorcachespeichers.

Die Zeiten für das Einschreiben in eine erfindungsgemäße Adressenliste CAM, bis zum Erscheinen einer HIT-Anzeige bzw. einer MISS-Anzeige liegen in derselben Größenordnung wie die Zeiten zum Einschreiben und Auslesen bei einem RAM-Speicher gleicher Kapazität als Adressenliste. Das Verfahren zum Nachladen einer neuen Seite aus dem Hauptspeicher MM trägt zusätzlich zur Erhöhung der Trefferrate bei. Mit einem erfindungsgemäßen VLSI-onchip Mikroprozessorcachespeicher ist eine wesentliche Leistungssteigerung eines Mikrocomputers zu erzielen. Die Erfindung trägt erheblich dazu bei, die Geschwindigkeitslücke zwischen der Zentraleinheit eines Mikroprozessors und dem Hauptspeicher MM bei gleichzeitig geringen Entwicklungskosten, geringem Energieverbrauch und geringem Platzbedarf ausgleichbar zu machen. Eine optimale Ausnutzung des Speichers RAM des VLSI-onchip Mikroprozessorcachespeichers und somit eine maximale Trefferrate wird durch eine byteweise Organisation erreicht, wobei die Bytes einzeln adressiert werden können.

**Patentansprüche**

1. Cachespeicher bestehend aus einem Assoziativspeicher (CAM) als Adressenliste und einem Schreib/Lesespeicher (RAM) zur Speicherung der Seiten, dadurch gekennzeichnet, daß der Cachespeicher on-chip mit einem Mikroprozessor in VLSI-Technik integriert ist, daß jeweils die Hitleitung (HIT) einer Speicherzellenzeile des Assoziativspeichers (CAM) direkt mit der jeweiligen Aktivierungsleitung (ARS) der zugeordneten Speicherzellenzeile des Schreib/Lesespeichers (RAM) verbunden ist, so daß bei Übereinstimmung der vom Mikroprozessor angelegten Adresse (MMA) mit einer der in der Adressenliste gespeicherten Adressen die zugehörige Seite im Schreib/Lesespeicher über die zugeordnete Aktivierungsleitung direkt ansteuerbar ist.

2. Verfahren zum Betrieb eines Cachespeichers nach Anspruch 1, dadurch gekennzeichnet, daß eine vom Mikroprozessor angelegte Adresse (MMA) in ihrem assoziativen Subjekt (AS) mit allen in der Adressenliste (CAM) abgespeicherten Adressen von Seiten aus einem Hauptspeicher parallel verglichen wird.

3. Verfahren nach Anspruch 2, dadurch gekennzeichnet, daß die Auswahl des auszulesenden Wortes innerhalb einer Seite im Schreib/Lesespeicher (RAM) über einen Decoder (DEC) erfolgt.

4. Verfahren nach Anspruch 2 oder 3, dadurch gekennzeichnet, daß bei einem Nachladen einer Seite aus dem Hauptspeicher diejenige Seite im VLSI-onchip Mikroprozessorcachespeicher überschrieben wird, die sich am längsten im VLSI-onchip Mikroprozessorcachespeicher befindet.

5. Verfahren nach Anspruch 4, dadurch gekennzeichnet, daß das Nachladen einer Seite aus dem Hauptspeicher mit Hilfe eines Schieberegisters (SH) realisiert wird.

6. Verfahren nach Anspruch 5, dadurch gekennzeichnet, daß im Schieberegister (SH) eine einzige « 1 » gespeichert ist, welche auf die zu überschreibende Seite weist, wobei nach jedem Nachladen diese « 1 » um eine Stelle verschoben wird.

7. Verfahren nach einem der Ansprüche 2 bis 6, dadurch gekennzeichnet, daß bei Nichtübereinstimmung der vom Mikroprozessor angelegten Adresse (MMA) in ihrem assoziativen Subjekt (AS) mit den in der Adressenliste (CAM) abgespeicherten Seitenadressen eine Leitung (MISS) aktiviert wird.

**Claims**

1. Cache memory consisting of an associative memory (CAM) as a directory and of a read-write memory (RAM) for storing the pages, characterized in that the cache memory is integrated on-chip with a microprocessor in VLSI technology, in that in each case the hit line (HIT) of a memory cell line of the associative memory (CAM) is connected directly to the respective activation line (ARS) of the associated memory cell line of the read-write memory (RAM), so that when the address (MMA) created by the microprocessor matches one of the addresses stored in the directory, the associated page in the read-write memory can be addressed directly via the associated activation line.

2. Method for operating a cache memory according to Claim 1, characterized in that an address (MMA) created by the microprocessor is compared in parallel in its associated subject (AS) with all addresses of pages from a main memory stored in the directory (CAM).

3. Method according to Claim 2, characterized in that the word to be read out is selected within a page in the read-write memory (RAM) via a decoder (DEC).

4. Method according to Claim 2 or 3, characterized in that, with each reloading of a page from the main memory, that page in the VLSI on-chip microprocessor cache memory which has been the longest in the VLSI on-chip microprocessor cache memory is overwritten.

5. Method according to Claim 4, characterized in that the reloading of a page from the main memory is realized with the aid of a shift register (SH).

6. Method according to Claim 5, characterized in that there is stored in the shift register (SH) a single « 1 » which points to the page to be overwritten, this « 1 » being displaced by one position after each reloading.

7. Method according to one of Claims 2 to 6, characterized in that a line (MISS) is activated when the address (MMA) created by the microprocessor does not match in its associative subject (AS) the page addresses stored in the directory (CAM).

**Revendications**

1. Antémémoire constituée par une mémoire associative (CAM) formant liste d'adresses et une mémoire d'enregistrement/lecture (RAM) servant à mémoriser les pages, caractérisée par le fait que l'antémémoire est intégrée on-chip avec un microprocesseur selon la technique VLSI, que respectivement le conducteur de coups au but (HIT) d'une ligne de cellules de la mémoire associative (CAM) est relié directement au conducteur respectif d'activation (ARS) de la ligne associée de cellules de la mémoire d'enregistrement/lecture (RAM), de sorte que, dans le cas d'une coïncidence entre l'adresse (MMA) appliquée par le microprocesseur et l'une des adresses mémorisées dans la liste d'adresses, la page associée dans la mémoire d'enregistrement/lecture peut être commandée directement par l'intermédiaire de la ligne associée d'activation.

2. Procédé pour faire fonctionner une antémémoire suivant la revendication 1, caractérisé par le fait que le sujet associatif (AS) d'une adresse (MMA) appliquée par le microprocesseur est comparé en parallèle à toutes les adresses, mémorisées dans la liste d'adresses (CAM), de pages tirées d'une mémoire principale.

3. Procédé suivant la revendication 2, caractérisé par le fait que la sélection du mot devant être lu, à l'intérieur d'une page de la mémoire d'enregistrement/lecture (RAM), s'effectue au moyen d'un décodeur (DEC).

4. Procédé suivant la revendication 2 ou 3, caractérisé par le fait que lors d'un post-chargement d'une page à partir de la mémoire principale, il se produit, à l'intérieur de l'antémémoire à microprocesseur VLSI on-chip, une surinscription sur la page qui est la plus ancienne, présente dans l'antémémoire.

5. Procédé suivant la revendication 4, caractérisé par le fait que le post-chargement d'une page à partir de la mémoire principale est réalisé à l'aide d'un registre à décalage (SH).

6. Procédé suivant la revendication 5, caractérisé par le fait qu'un « 1 » unique, qui indique la page sur laquelle la surinscription doit être exécutée, est mémorisé dans le registre à décalage (SH), auquel cas ce « 1 » est décalé d'une position après chaque post-chargement.

7. Procédé suivant l'une des revendications 2 à 6, caractérisé par le fait que dans le cas où il n'y a pas coïncidence entre le sujet associatif (AS) de l'adresse (MMA) appliquée par le microprocesseur et les adresses de pages mémorisées dans la liste d'adresses (CAM), un conducteur (MISS) est activé.

EP 0 075 715 B1

## FIG 1

| AS | R | MMA |

DEC

| PAGE 1 1 | BYTE 0 | BYTE 1 | | BYTE $2^{\bar{n}}-1$ |

SH

CAM

RAM

R/$\overline{W}$

PAGEm

SHIFT

MISS

## FIG 2

HIT

CAM-Zelle

$W_i$

$B_j$

$\overline{B}_j$

1

FIG 3

EP 0 075 715 B1